# DEMANDE DE BREVET EUROPEEN

(11) **EP 1 496 374 A1**
(43) Date de publication de la demande: **12.01.2005**
(21) Numéro de dépôt: 03102108.2
(22) Date de dépôt: 11.07.2003
(51) Int. Cl.: G01V 8/20

(54) **Barrière lumineuse**

(71) Demandeur: Schneider Electric Industries SAS, 92500 Rueil-Malmaison (FR)
(72) Inventeur: EMMANUEL, Michel, 92506, RUEIL-MALMAISON cedex (FR)

(57) **Abrégé**

Barrière lumineuse comprenant deux plots de forme allongée définissant entre eux une zone à surveiller.

Chaque plot P1,P2 comprend en regard de l'autre plot une surface striée de régions claires 13 et sombres 12 et formant ainsi une grille. Un récepteur linéaire ou matriciel doté d'une optique appropriée capte l'image de la grille et les moyens de traitement des deux plots traitent les signaux d'image correspondants pour délivrer un signal d'intrusion. Chaque plot présente de préférence deux récepteurs RH1,RB1 ; RH2,RB2 près de ses extrémités et l'optique associée à chaque récepteur couvre toute la longueur du plot opposé, et les moyens de traitement effectuent un traitement redondant des images de la zone surveillée.

## Description

La présente invention concerne une barrière lumineuse comprenant deux plots de forme allongée définissant entre eux et selon leur longueur une zone àsurveiller, et comprenant au moins une source lumineuse, au moins un récepteur optique, et des moyens de traitement aptes àtraiter les signaux reçus de la source lumineuse par le récepteur, afin de délivrer un signal d'intrusion.

Les barrières lumineuses usuelles comportent deux plots de forme allongée dont l'un est doté d'une série d'éléments optiques émetteurs et dont l'autre est dotée d'une série d'éléments optiques récepteurs. Il serait souhaitable d'une part d'utiliser comme éléments récepteurs des capteurs linéaires ou matriciels de type ccd ou cmos, étant donné qu'actuellement les performances de ces capteurs augmentent et que leur prix diminue, et d'autre part d'agencer ces éléments et les moyens de traitement correspondants de manière appropriée àune barrière lumineuse.

L'invention a pour but de répondre àces desiderata dans une barrière lumineuse de sécurité.

Selon l'invention, chaque plot comprend en regard de l'autre plot une surface dotée de zones claires et de zones sombres alternées selon la longueur du plot et formant une grille, et chaque plot comprend au moins un récepteur optique linéaire (ou matriciel) avec des points optosensibles qui se succèdent selon la longueur du plot, et, associée au récepteur linéaire, une optique adaptée àcapter l'image d'au moins une partie de la longueur de la grille opposée ; le récepteur linéaire capte l'image de la partie de grille opposée et délivre un signal d'image de grille respectif, et les moyens de traitement des deux plots traitent les signaux d'image de grille provenant de leur récepteur linéaire pour délivrer le signal d'intrusion.

Chaque plot peut comporter près d'une extrémité un seul récepteur linéaire dont l'optique associée couvre toute la longueur du plot opposé, les récepteurs optiques des plots respectifs étant situés aux extrémités respectivement opposées des plots. De préférence, dans le but d'obtenir une meilleure sécurité, chaque plot comporte deux récepteurs linéaires situés près de ses deux extrémités, et l'optique associée àchaque récepteur d'un plot couvre toute la longueur du plot opposé, les moyens de traitement comportant des moyens de traitement de sécurité redondants de la zone surveillée.

Les moyens de traitement de l'un des deux plots peuvent superviser de manière avantageuse les moyens de traitement de l'autre plot, et les moyens de traitement des deux plots sont alors reliés par une liaison filaire ou optique assurant la transmission du signal de diagnostic du plot supervisé vers le plot maître, et la transmission d'un signal de synchronisation de la source lumineuse d'un plot avec le récepteur optique de l'autre plot.

Les caractéristiques et avantages vont apparaître dans la description détaillée qui suit, avec référence àun mode de réalisation donné àtitre d'exemple et représenté sur les dessins annexés.

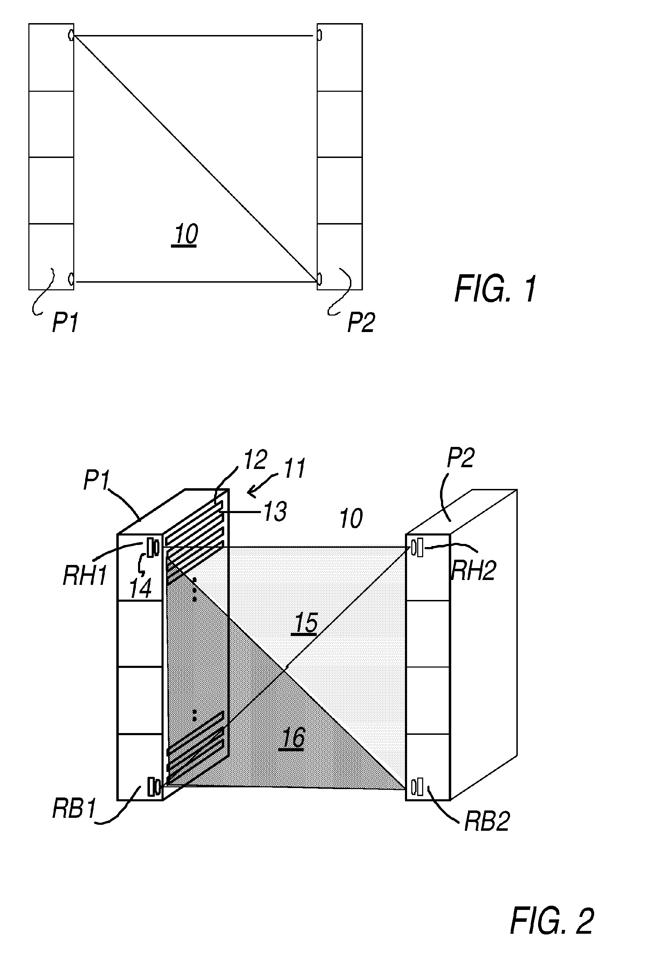

La figure 1 représente schématiquement une barrière lumineuse selon l'invention.
La figure 2 montre la barrière lumineuse en perspective.
La figure 3 montre plus en détail la barrière des figures 1 et 2.

La barrière lumineuse illustrée sur les figures comprend deux plots P1,P2 disposés en vis àvis pour embrasser une zone 10 àsurveiller. Chaque plot P1 ,P2 comprend un caisson qui présente vers le caisson opposé une surface 11 dotée de stries ou raies sombres 12 horizontales séparées par des fentes 13 susceptibles d'être éclairées ou de laisser passer un faisceau optique d'émission. Les stries et fentes alternées sont dimensionnées, par exemple avec une largeur et un pas de 3mm, de façon àdétecter un objet intrus, par exemple un doigt, etc..

Chaque plot P1,P2 comprend d'autre part deux récepteurs optiques R notés RH1, RB1 pour P1 et respectivement RH2,RB2 pour P2. Les capteurs R sont constitués par des capteurs linéaires ou matriciels de type ccd, cmos ou analogue. Dans le présent texte, les capteurs sont qualifiés de linéaires, qu'ils soient àproprement parler linéaires ou matriciels, de manière àsimplifier le vocabulaire.

Les capteurs RH1,RH2 sont situés près d'une extrémité du plot respectif (extrémité haute sur les figures), tandis que les capteurs RB1,RB2 sont situés près de l'autre extrémité du plot (extrémité basse sur les figures). A chaque capteur est associée une lentille ou optique 14 adaptée àrecevoir un faisceau d'angle prédéterminé correspondant àla totalité de la hauteur striée du plot en vis à vis. Cet angle peut être, àtitre indicatif et non limitatif, de l'ordre de 15°à60°.

Le dispositif peut fonctionner avec un seul récepteur R par plot, par exemple RH1 pour P1 et RB2 pour P2, chaque récepteur surveillant alors une région triangulaire 15 ou 16 telle que l'assemblage des deux régions couvre l'ensemble de la zone 10. On peut aussi prévoir plus de deux récepteurs optiques par plot, par exemple en localisant des récepteurs aux extrémités et également au centre du plot.

De préférence, chaque plot présente toutefois deux récepteurs comme il a été indiqué, de façon àcouvrir la zone 10 de manière redondante, ce qui d'une part facilite un traitement sécurisé, par la surveillance croisée des régions triangulaires 15,16 puis 17,18, et ce qui d'autre part permet de déterminer la position et la taille d'un objet intrus.

Chaque plot comprend une source lumineuse interne E1,E2 àémission périodique synchrone àl'activation d'un récepteur dans le plot en vis àvis.

Des moyens de traitement comprenant des circuits 21,22 auxquels sont adjoints des moyens logiciels sont associés aux plots respectifs P1,P2, afin notamment de régir l'émission cyclique de lumière de la source lumineuse 17,18 d'un plot P1,P2, d'activer de façon synchrone le capteur R du plot opposé P2,P1 et de traiter les signaux d'image. A cet effet, le circuit 21 présente deux contrôleurs 23,24 associés aux capteurs respectifs RH1,RB1 et le circuit 22 présente deux contrôleurs 25,26 associés aux capteurs respectifs RH2,RB2. Le plot P2 est supervisé par le plot P1 ou plot "maître", de sorte que le contrôleur 23 supervise le contrôleur 26 et que le contrôleur 24 supervise le contrôleur 25. Le plot P1 présente un relais 27 générant en réponse au traitement un signal de sortie S significatif d'un défaut ou d'une intrusion dans la zone 10.

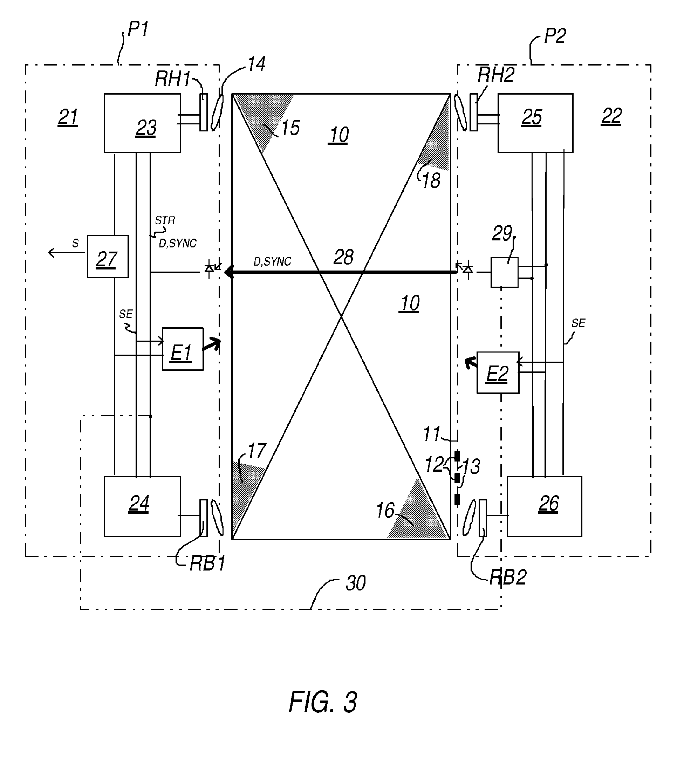

Une liaison optique illustrée en 28 sur la figure 3 et localisée hors zone aveugle (zone de blanking) assure la transmission des signaux de diagnostic D, notamment d'image de la zone surveillée, d'un élément optoémetteur du plot P2 vers un élément optorécepteur du plot P1 ; les signaux de diagnostic D résultent des signaux provenant des contrôleurs 25,26 et combinés au moyen d'un OU logique 29. La liaison peut aussi être filaire comme indiqué en tirets en 30. La liaison 28 ou 30 achemine aussi un signal de synchronisation SYNC qui synchronise les signaux de démarrage de cycle STR des contrôleurs respectifs et les signaux d'émission lumineuse SE correspondants.

## Revendications

1. Barrière lumineuse comprenant deux plots de forme allongée définissant entre eux et selon leur longueur une zone à surveiller et comprenant au moins une source lumineuse, au moins un récepteur optique, et des moyens de traitement aptes à traiter les signaux reçus de la source lumineuse par le récepteur, afin de délivrer un signal d'intrusion,
***caractérisé par le fait que*** chaque plot (P1,P2) comprend en regard de l'autre plot
- une surface (11) dotée de zones claires (13) et de zones sombres (12) alternées selon la longueur du plot et formant une grille,
- un récepteur optique (R) linéaire (ou matriciel) avec des points optosensibles qui se succèdent selon la longueur du plot, et au récepteur linéaire (R) est associée une optique (14) adaptée à capter l'image d'une partie de la longueur de la grille opposée,
- le récepteur linéaire (R) capte l'image de la partie de grille opposée et délivre un signal d'image de grille respectif,
- les moyens de traitement (23-26) des deux plots (P1,P2) traitent les signaux d'image de grille provenant des récepteurs linéaires pour délivrer le signal d'intrusion (S).

2. Barrière lumineuse selon la revendication 1, **caractérisée par le fait que** chaque plot (P1,P2) comporte près d'une extrémité un seul récepteur linéaire (23, 26), dont l'optique associée (14) couvre toute la longueur du plot opposé (P2,P1), les récepteurs optiques (RB2,RH1) des plots respectifs étant situés aux extrémités respectivement opposées des plots.

3. Barrière lumineuse selon la revendication 1, **caractérisée par le fait que** la détection est cyclique, chaque plot comprenant une source lumineuse interne (E1,E2) à émission périodique synchrone à l'activation d'un récepteur linéaire (R) dans le plot en vis à vis.

4. Barrière lumineuse selon la revendication 1, **caractérisée par le fait que** chaque plot (P1,P2) comporte deux récepteurs linéaires (RH1,RB1 ;RH2,RB2) situés près de ses deux extrémités, et l'optique (14) associée à chaque récepteur couvre toute la longueur du plot opposé(P2,P1 ), les moyens de traitement (21,22) comportant des moyens de traitement de sécurité redondants des signaux d'image de la zone surveillée.

5. Barrière lumineuse selon la revendication 4, **caractérisée par le fait que** les moyens de traitement (21,23,24) de l'un des deux plots (P1) supervisent les moyens de traitement (22,25,26) de l'autre plot, et les moyens de traitement des deux plots sont reliés par une liaison (28;30) assurant la transmission du signal de diagnostic (D) du plot supervisé vers le plot maître, et la transmission d'un signal de synchronisation (SYNC) de la source (E) d'un plot avec le récepteur optique (R) de l'autre plot.

6. Barrière lumineuse selon la revendication 5, **caractérisée par le fait que** la liaison (28) est optique.

7. Barrière lumineuse selon la revendication 5, **caractérisée par le fait que** la liaison (30) est filaire.
